# EUROPEAN PATENT APPLICATION

(11) **EP 3 270 304 A1**
(43) Date of publication of application: **17.01.2018**
(21) Application number: 17180788.6
(22) Date of filing: 11.07.2017
(51) Int. Cl.: G06F 17/30

(54) **ARTIFICIAL INTELLIGENCE-BASED PRIOR ART DOCUMENT IDENTIFICATION SYSTEM**

(30) Priority: 13.07.2016 US 201662361976 P; 16.06.2017 US 201715625169
(71) Applicant: Palantir Technologies Inc., Palo Alto, CA 94301 (US)
(72) Inventor: ERENRICH, Daniel, Palo Alto, CA 94301 (US); MUKHERJEE, Anirvan, Palo Alto, CA 94301 (US); ELKHERJ, Matthew, Palo Alto, CA 94301 (US); KESIN, Maxim, Palo Alto, CA 94301 (US); ELTOUKHY, Adam, Palo Alto, CA 94301 (US); LEE, Jason, Palo Alto, CA 94301 (US)
(74) Representative: Derry, Paul Stefan

(57) **Abstract**

Various systems and methods are provided that identify prior art patent references for a subject patent application. For example, the system preprocesses a corpus of patent references to identify keywords that are present in each of the patent references, n-grams present in the corpus, and a weighting associated with the identified n-grams. To identify prior art patent references, the system requests a user to provide a patent application. The system extracts n-grams found in the provided patent application and orders the n-grams based on the assigned n-gram weights. The system compares the top Y-rated n-grams with the identified keywords and retrieves patent references that include a keyword that matches one of the top Y-rated n-grams. The system re-ranks the retrieved patent references using, for example, artificial intelligence. The top Z-ranked retrieved patent references are transmitted to a user device for display in a user interface.

## Description

### CROSS-REFERENCE TO RELATED APPLICATIONS

This application claims priority under 35 U.S.C. § 119(e) to U.S. Provisional Application No. 62/361,976, entitled "ARTIFICIAL INTELLIGENCE-BASED PRIOR ART DOCUMENT IDENTIFICATION SYSTEM" and filed on July 13, 2016, which is hereby incorporated by reference herein in its entirety.

### TECHNICAL FIELD

The present disclosure relates to systems and techniques for using artificial intelligence to identify prior art documents.

### BACKGROUND

A corpus can include millions of documents. To enable a user to search through the corpus, some or all of the documents can be scanned using optical character recognition (OCR) or similar technologies. Such technologies can transform a digital copy of a document such that text in the document is recognized. Thus, the user can provide a keyword to a document retrieval system and the document retrieval system can return one or more documents from the corpus that includes the keyword.

### SUMMARY

The systems, methods, and devices described herein each have several aspects, no single one of which is solely responsible for its desirable attributes. Without limiting the scope of this disclosure, several non-limiting features will now be discussed briefly.

Disclosed herein is a system that identifies prior art patent references for a subject patent application by identifying similarities between a corpus of patent references and the subject patent application and ranking the patent references in the corpus based on the identified similarities. For example, the system first performs preprocessing operations before identifying prior art patent references. The system preprocesses a corpus of patent references to identify keywords that are present in each of the patent references. The system also preprocesses the corpus of patent references to identify n-grams present in the corpus and statistics associated with the identified n-grams (e.g., a number of occurrences of a particular n-gram). As used herein, an n-gram refers to a contiguous sequence of *n* phonemes, syllables, letters, words, and/or base pairs (e.g., a unigram is a contiguous sequence of phonemes, syllables, letters, words, and/or base pairs, a bigram is a contiguous sequence of two phonemes, syllables, letters, words, and/or base pairs, a tri-gram is a contiguous sequence of three phonemes, syllables, letters, words, and/or base pairs, etc.). Using the statistics, the system can assign weights to each of the n-grams. To identify prior art patent references, the system requests a user to provide a patent application or portion(s) of a patent application for analysis. The system can extract n-grams found within a particular section of the provided patent application (e.g., the claims section) and order the n-grams based on the weights assigned to n-grams during the preprocessing operations. The system may then compare the top Y-rated n-grams with the identified keywords and retrieve patent references that include a keyword that matches one of the top Y-rated n-grams. The system then re-ranks the retrieved patent references (e.g., using a document similarity technique like cosine similarity, by identifying which patent references have matched terms with higher weights, based on the sections or patent fields of patent references in which the matched terms are found, using artificial intelligence, etc.). The top Z-ranked retrieved patent references can then be displayed in a user interface as the identified prior art patent references.

One aspect of the disclosure provides a computer-implemented method for identifying relevant documents using artificial intelligence. The computer-implemented method comprises retrieving, from a document database, a plurality of prior art documents; for individual patent documents in the plurality of prior art documents, processing the respective prior art document to identify one or more keywords associated with the respective prior art document; processing the prior art documents in the plurality of prior art documents to identify a plurality of n-grams and a number of occurrences of each n-gram; analyzing the plurality of n-grams to identify a weight associated with each n-gram in the plurality of n-grams, where the weight associated with each n-gram in the plurality of n-grams is based on a number of occurrences of the respective n-gram; receiving, from a user, a first patent document; processing a claims section of the first prior art document to identify a second plurality of n-grams; ranking each n-gram in the second plurality of n-grams based on the identified weights associated with each n-gram in the plurality of n-grams; identifying a first set of n-grams in the second plurality of n-grams that are ranked above a threshold value; comparing the first set of n-grams with the one or more keywords; identifying a first set of prior art documents in the plurality of prior art documents associated with a keyword in the one or more keywords that matches an n-gram in the first set of n-grams based on the comparison; for each prior art document in the first set of prior art documents, determining a similarity between the first patent document and the respective prior art document in the first set of prior art documents; scoring the first set of prior art documents based on the determined similarities; ranking the first set of prior art documents based on the scoring; and transmitting search result data to a user device for display in a user interface, where the search result data comprises prior art documents in the first set of prior art documents that are ranked above a second threshold value.

The computer-implemented method of the preceding paragraph can include any sub-combination of the following features: where determining a similarity between the first patent document and the respective prior art document in the first set of prior art documents further comprises determining the similarity between the first patent document and the respective prior art document in the first set of prior art documents using one of a vector comparison, a comparison of patent fields, or artificial intelligence; where the patent fields comprises at least one of a title field, an inventor field, an assignee field, a patent number field, a patent date field, a priority date field, a classification code field, an art unit field, a sub-art unit field, an examiner name field, an application number field, an application filing date field, or an other publications field; where the prior art documents in the plurality of prior art documents comprise at least one of a patent, a patent publication, or an academic paper; where determining a similarity between the first patent document and the respective prior art document in the first set of prior art documents further comprises determining the similarity between the first patent document and the respective prior art document in the first set of prior art documents using a neural network; and where the vector comparison comprises cosine similarity.

Another aspect of the disclosure provides a document identification system for identifying a prior art reference using artificial intelligence. The document identification system comprises one or more computer processors. The document identification system further comprises a computer readable storage medium storing program instructions configured for execution by the one or more computer processors in order to cause the computing system to: retrieve, from a document database, a plurality of prior art documents; process the prior art documents in the plurality of prior art documents to identify a plurality of n-grams and a weight associated with each n-gram in the plurality of n-grams; receive, from a user, a first patent document; process a claims section of the first patent document to identify a second plurality of n-grams; rank each n-gram in the second plurality of n-grams based on the identified weights associated with each n-gram in the plurality of n-grams; identify a first set of n-grams in the second plurality of n-grams that are ranked above a threshold value; identify a first set of prior art documents in the plurality of prior art documents based on the first set of n-grams in the second plurality of n-grams; rank the first set of prior art documents based on a similarity between the first prior art document and the respective prior art document in the first set of prior art documents; and display, in a user interface, prior art documents in the first set of prior art documents that are ranked above a second threshold value.

The document identification system of the preceding paragraph can include any sub-combination of the following features: where the prior art documents in the plurality of prior art documents comprise at least one of a patent, a patent publication, or an academic paper; where the computer readable storage medium further stores program instructions that cause the computing system to rank the first set of prior art documents using one of a vector comparison, a comparison of patent fields, or artificial intelligence; where the computer readable storage medium further stores program instructions that cause the computing system to retrieve a blacklist that lists a third plurality of n-grams and not weight n-grams in the third plurality of n-grams; and where the computer readable storage medium further stores program instructions that cause the computing system to rank the first set of prior art documents based on the similarity and based on user feedback using machine learning techniques.

Another aspect of the disclosure provides non-transitory, computer-readable storage media comprising computer-executable instructions for identifying a prior art reference using artificial intelligence, wherein the computer-executable instructions, when executed by a computer system, cause the computer system to: retrieve, from a document database, a plurality of prior art documents; process the prior art documents in the plurality of prior art documents to identify a plurality of n-grams and a weight associated with each n-gram in the plurality of n-grams; receive, from a user, a first patent document; process a claims section of the first patent document to identify a second plurality of n-grams; rank each n-gram in the second plurality of n-grams based on the identified weights associated with each n-gram in the plurality of n-grams; identify a first set of n-grams in the second plurality of n-grams that are ranked above a threshold value; identify a first set of prior art documents in the plurality of prior art documents based on the first set of n-grams in the second plurality of n-grams; rank the first set of prior art documents based on a similarity between the first prior art document and the respective prior art document in the first set of prior art documents; and display, in a user interface, prior art documents in the first set of prior art documents that are ranked above a second threshold value.

The non-transitory, computer-readable storage media of the preceding paragraph can include any sub-combination of the following features: where the prior art documents in the plurality of prior art documents comprise at least one of a patent, a patent publication, or an academic paper; where the computer-executable instructions, when executed, further cause the computer system to rank the first set of prior art documents using one of a vector comparison, a comparison of patent fields, or artificial intelligence; where the computer-executable instructions, when executed, further cause the computer system to retrieve a blacklist that lists a third plurality of n-grams and not weight n-grams in the third plurality of n-grams; and where the computer-executable instructions, when executed, further cause the computer system to rank the first set of prior art documents based on the similarity and based on user feedback using machine learning techniques.

Embodiments provide methods and systems for identifying relevant prior art documents in a way that utilizes less processing resources. For example, a user is not required to select and input keywords for the first patent application. For example, the first patent application and the prior art applications are represented for subsequent analysis in a reduced data format using n-grams, which makes computation less intensive and may involve less data being transferred.

### BRIEF DESCRIPTION OF THE DRAWINGS

Figure 1 illustrates a block diagram showing the various components of a document identification system.
Figure 2A is a flowchart depicting an illustrative operation of processing a prior art reference corpus.
Figure 2B is a flowchart depicting an illustrative operation of identifying a prior art reference.
Figure 3 illustrates a computer system with which certain methods discussed herein may be implemented, according to one embodiment.

### DETAILED DESCRIPTION OF SPECIFIC EMBODIMENTS

### Overview

As described above, a corpus can include millions of documents. Patent examiners, for example, may identify one or more documents from a corpus of documents that can be cited to reject claims of a pending patent application. The corpus can include patents, patent publications, academic papers, and/or the like. The documents in the corpus are often digitized such that the text in each of the documents is recognizable by a keyword search tool. Thus, patent examiners generally use a keyword search tool to identify documents within the corpus to use as a basis for rejecting the claims of a pending patent application.

However, the keyword search tool often produces results that are not relevant to the patent application being examined. For example, a patent examiner may select a keyword to search based on a term used in a claim being examined. The term, however, can have different meanings depending on the context in which the term is used. While the keyword search tool may accurately determine that a first document in the corpus also includes the selected keyword, the keyword as used in the first document may not have the same meaning as the keyword as used in the claim. Thus, the process by which the keyword search tool produces results can cause the patent examiner to spend an unwanted and potentially significant portion of time reviewing ultimately irrelevant documents.

Accordingly, described herein is a system that identifies prior art patent references for a subject patent application by identifying similarities between a corpus of patent references and the subject patent application and ranking the patent references in the corpus based on the identified similarities. For example, the system first performs preprocessing operations before identifying prior art patent references. The system preprocesses a corpus of patent references to identify keywords that are present in each of the patent references. The system also preprocesses the corpus of patent references to identify n-grams present in the corpus and statistics associated with the identified n-grams (e.g., a number of occurrences of a particular n-gram). As used herein, an n-gram refers to a contiguous sequence of *n* phonemes, syllables, letters, words, and/or base pairs (e.g., a unigram is a contiguous sequence of phonemes, syllables, letters, words, and/or base pairs, a bigram is a contiguous sequence of two phonemes, syllables, letters, words, and/or base pairs, a tri-gram is a contiguous sequence of three phonemes, syllables, letters, words, and/or base pairs, etc.). Using the statistics, the system can assign weights to each of the n-grams.

To identify prior art patent references, the system requests a user to provide a patent application for analysis. The system can extract n-grams found within a particular section of the provided patent application (e.g., the claims section) and order the n-grams based on the weights assigned to n-grams during the preprocessing operations. The system may then compare the top Y-rated n-grams with the identified keywords and retrieve patent references that include a keyword that matches one of the top Y-rated n-grams. The system then re-ranks the retrieved patent references. For example, the system can perform the re-ranking:
(1) using a document similarity technique (e.g., cosine similarity, semantic similarity, terminology extraction, Jacard similarity, metric similarity, Euclidean distance, etc.);
(2) by identifying which patent references have matched terms with higher weights;
(3) based on the sections or patent fields of patent references in which the matched terms are found; (4) using artificial intelligence techniques known to one of ordinary skill in the art, such as a neural network, deep learning, support vector machines, clustering, Bayesian networks, etc.; (5) by determining how similar the patent classifications of the retrieved prior art references are with each other (e.g., retrieved prior art references that are more similar to other prior art references based on patent classification may be ranked higher), where the similarities between patent classifications are learned using machine learning and/or are manually set; (6) by determining a number of times a particular retrieved prior art reference is cited; (7) using metadata created by the patent examiners of the respective retrieved prior art references (e.g., patent search terms); and/or the like. The top Z-ranked retrieved patent references can then be displayed in a user interface as the identified prior art patent references.

The disclosure provided herein is described with respect to identifying prior art references, but this is not meant to be limiting. The document identification techniques described herein can be applied to any type of document for any type of document search application.

### Exemplary System Overview

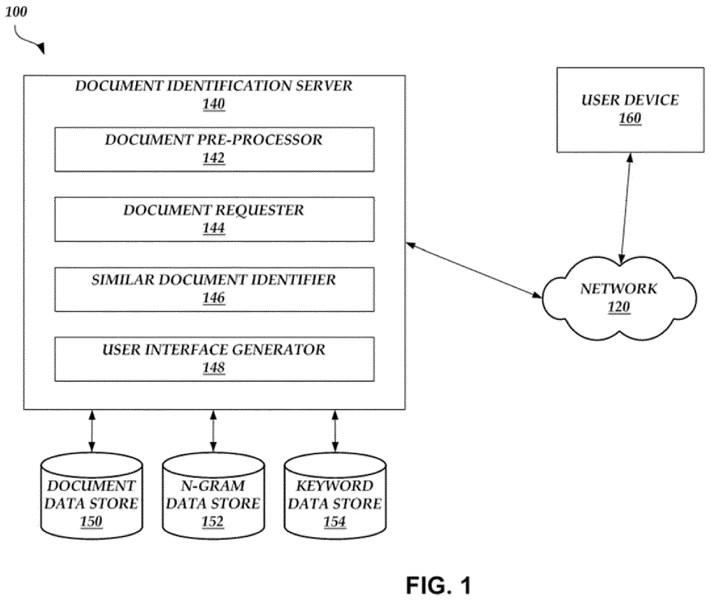

Figure 1 illustrates a block diagram showing the various components of a document identification system 100. As illustrated in Figure 1, the document identification system 100 may include a document identification server 140, a document data store 150, an n-gram data store 152, a keyword data store 154, and a user device 160. In an embodiment, the document identification server 140 and the user device 160 communicate via a network 120. In other embodiments, not shown, the functionality disclosed with reference to document identification server 140 is distributed to other computing devices and/or partially performed by multiple computing devices.

The document identification server 140 can identify documents (e.g., prior art references, such as patents, patent publications, academic papers, etc.) similar to a document (e.g., a patent application) provided by a user via the user device 160. The document identification server 140 may include various modules to perform this functionality. For example, the document identification server 140 may include a document pre-processor 142, a document requester 144, a similar document identifier 146, and a user interface generator 148. In an embodiment, the document pre-processor 142, the document requester 144, the similar document identifier 146, and the user interface generator 148 are each implemented as executable code modules that are stored in the memory of, and executed by the processor(s) of, the document identification server 140. The document pre-processor 142, the document requester 144, the similar document identifier 146, and the user interface generator 148 may also be implemented partly or wholly in application-specific hardware.

The document pre-processor 142 can be configured to perform preprocessing operations before the document identification server 140 identifies prior art references. For example, the document pre-processor 142 can preprocess a corpus of prior art references stored in the document data store 150 to identify keywords that are present in each of the prior art references. In some embodiments, the document pre-processor 142 identifies keywords from an entire prior art reference. In other embodiments, the document pre-processor 142 identifies section headers in the prior art reference (e.g., title, field, background, summary, brief description of the drawings, detailed description of specific embodiments, sub-headers in the detailed description of specific embodiments, claims, abstract, etc.) and extracts keywords only from certain section headers (e.g., title, abstract, and claims). The identified keywords can be stored in the keyword data store 154 with an identification of which prior art reference(s) include the respective identified keyword.

The document pre-processor 142 can also be configured to identify n-grams present in each of the prior art references and statistics associated with the identified n-grams. For example, the statistics can include a number of occurrences of a particular n-gram. Using the statistics, the document pre-processor 142 can assign weights to each of the n-grams. For example, if a first n-gram occurs more frequently than a second n-gram, then the document pre-processor 142 can assign the first n-gram a higher weight. The assigned weight can alternatively or in addition be based on the portion of the prior art reference from which the n-gram originates (e.g., n-grams from the detailed description section may be weighted higher than n-grams from the background section). The n-grams, the statistics, and/or the assigned weights can be stored in the n-gram data store 152.

In some embodiments, the document pre-processor 142 uses a blacklist to remove certain n-grams before storage in the n-gram data store 152 occurs. For example, certain n-grams may be found in most, if not all, prior art references. Such n-grams can include "comprising of," "consisting of," "including a," "configured to," "what is claimed is," and/or the like. To improve search results, the document pre-processor 142 can ignore these blacklisted n-grams such that no statistics and/or weights are computed for these n-grams and the n-grams are not stored in the n-gram data store 152. Likewise, the document pre-processor 142 can use a stop words list that lists keywords that should not be stored in the keyword data store 154. The blacklist and/or the stop words list can be user-defined (e.g., the user can list which n-grams to ignore) and/or retrieved from an external source via the network 120.

The document requester 144 can be configured to transmit a request to the user device 160 via the network 120 to provide a document to be analyzed. For example, the document requester 144 can request the user device 160 to provide a patent application being examined or a portion thereof (e.g., the claims, the abstract, the summary, etc.). Once received, the document requester 144 can transmit the provided document to the document pre-processor 142. The document pre-processor 142 can then extract n-grams from the provided document using the techniques described above. In some embodiments, the document pre-processor 142 extracts n-grams from a particular section of the patent application, such as the abstract, the claims section, the summary, and/or the like. In further embodiments, the document pre-processor 142 extracts n-grams from a portion of a section of the patent application indicated by the user device 160. For example, the document pre-processor 142 can extract n-grams from a specific claim, independent claims, dependent claims, and/or the like from the claims section of the patent application. The weights of the extracted n-grams can be determined as described above. Alternatively or in addition, the weights of the n-grams extracted from the patent application being analyzed can be based on the section of the patent application from which the n-grams originated (e.g., n-grams in independent claims can be weighted more than n-grams in the background section). The extracted n-grams can then be transmitted to the similar document identifier 146.

The similar document identifier 146 can order the extracted n-grams based on the weights assigned to n-grams during the preprocessing operations performed by the document pre-processor 142 or during the processing by the document pre-processor 142 of the patent application being analyzed. For example, the similar document identifier 146 can retrieve the statistics and/or weights associated with each of the extracted n-grams from the n-gram data store 152 (e.g., if using weights stored when processing the prior art references) or can retrieve the statistics and/or weights directly from the document pre-processor 142 (e.g., if using weights assigned when processing the patent application being analyzed) and order the extracted n-grams based on which ones are assigned the highest weight. A blacklist of n-grams can also be used to remove extracted n-grams that match n-grams in the blacklist from being included in the ordered list of n-grams or to place the extracted n-grams that match n-grams in the blacklist at the end of the ordered list of n-grams (e.g., if a blacklist was not previously used to prevent certain n-grams from being stored in the n-gram data store 152). The similar document identifier 146 can then compare the top Y-ranked n-grams with the information stored in the keyword data store 154 to identify keywords that match the top Y-ranked n-grams. The similar document identifier 146 can further use the information stored in the keyword data store 154 to identify which prior art references include keyword(s) that match the top Y-ranked n-grams. Such prior art references can be retrieved by the similar document identifier 146 from the document data store 150. In some embodiments, the similar document identifier 146 can retrieve a subset of the prior art references that include keyword(s) that match the top Y-ranked n-grams. For example, the prior art references that are retrieved can be filtered or retained by the similar document identifier 146 based on non-similarity metrics, such as priority and/or filing dates (e.g., prior art references that have priority and/or filing dates that fall after the priority and/or filing date of the patent application being examined can be filtered), classification codes, art codes, art units, country or region of patent issuance or publication, assignee, inventor, and/or the like.

Once the appropriate prior art references are retrieved from the document data store 150 in a manner as described above, the similar document identifier 146 can forward the prior art references to the user interface generator 148. Alternatively, once the appropriate prior art references are retrieved from the document data store 150, the similar document identifier 146 can re-rank the retrieved prior art references. For example, the similar document identifier 146 can perform the re-ranking (1) using a document similarity technique (e.g., cosine similarity, semantic similarity, terminology extraction, Jacard similarity, metric similarity, Euclidean distance, etc.); (2) by identifying which prior art references include keywords that correspond to n-grams with higher weights; (3) based on the sections or patent fields of prior art references in which the keywords are found (e.g., a prior art reference that includes a keyword and that corresponds to a first art unit may be more important, and thus ranked higher, than another prior art reference that includes the keyword and that corresponds to a second art unit, a keyword found in the claims section may cause a prior art reference to be ranked higher than if the keyword is found in the background section, etc.); (4) using artificial intelligence techniques known to one of ordinary skill in the art, such as a neural network, deep learning, support vector machines, clustering, Bayesian networks, etc.; (5) by determining how similar the patent classifications of the retrieved prior art references are with each other (e.g., retrieved prior art references that are more similar to other prior art references based on patent classification may be ranked higher), where the similarities between patent classifications are learned using machine learning and/or are manually set; (6) by determining a number of times a particular retrieved prior art reference is cited; (7) using metadata created by the patent examiners of the respective retrieved prior art references (e.g., patent search terms); and/or the like. The top Z-ranked retrieved prior art references can then be forwarded to the user interface generator 148.

In an embodiment, the similar document identifier 146 can use machine learning techniques to fine-tune the re-ranking of retrieved prior art references described above. For example, in the user interface generated by the user interface generator 148 (e.g., described below), the user interface can include an option for a patent examiner to print a prior art reference, insert a citation for a prior art reference into an office action, and/or the like. The similar document identifier 146 can identify when a user prints a prior art reference, inserts a citation for a prior art reference into an office action, selects a prior art reference as being relevant, and/or the like and use this identification as an indication that the result produced by the similar document identifier 146 was relevant. Similarly, the similar document identifier 146 can track when the user does not print the prior art reference, insert a citation for the prior art reference into an office action, and/or the like. Using machine learning techniques and information related to how relevant a user found a search result, the similar document identifier 146 can adjust and/or update the re-ranked procedure for use when analyzing another patent document provided by the user in the future. As another example, the similar document identifier 146 can use existing data, such as the patent reference network, to initially rank retrieved prior art references when human-generated labels associated with the prior art references (e.g., that a prior art reference was printed, that a prior art reference was cited in an office action, etc.) are unavailable. Standard machine learning techniques known to one of skill in the art can then be used by the similar document identifier 146 to weight the existing data with the human-generated labels when they become available to re-rank the retrieved prior art references.

In a further embodiment, the similar document identifier 146 can perform active learning by using machine learning techniques to determine which results are displayed to the user in a user interface. For example, the similar document identifier 146 can instruct the user interface generator 148 to display a select number of the top Z-ranked retrieved prior art references. Based on whether the user finds these prior art references relevant (e.g., using the indications described above) can determine whether the similar document identifier 146 should perform another re-rank of the retrieved prior art references to generate another listing of the top Z-ranked retrieved prior art references or whether the similar document identifier 146 should instruct the user interface generator 148 to display more of the top Z-ranked retrieved prior art references.

The similar document identifier 146 can perform the re-ranking in parallel to produce faster results. For example, the similar document identifier 146 can simultaneously or nearly simultaneously re-rank each retrieved prior art reference separately and then aggregate the results when complete.

The user interface generator 148 can be configured to generate an interactive user interface that displays a list of the top Y-ranked retrieved prior art references. The user interface may be interactive in that a user can select one or more of the prior art references in the list to view at least a portion of the selected document and/or a location(s) in which the keyword matching the extracted n-gram is found. The user interface generator 148 can transmit data for rendering the interactive user interface to the user device 160 via the network 120 for displaying the interactive user interface. In an embodiment, the transmitted data includes the list of the top Y-ranked retrieved prior art references.

The document data store 150 can store a plurality of prior art references. For example, the document data store 150 can store patents, patent publications, academic papers, and/or the like. While the document data store 150 is illustrated as being external to the document identification server 140, this is not meant to be limiting. The document data store 150 can be internal to the document identification server 140.

The n-gram data store 152 can store a plurality of n-grams extracted from the prior art references stored in the document data store 150 as well as statistics and/or weights associated with each of the n-grams. For example, the n-gram data store 152 can store bi-grams, tri-grams, and/or the like. While the n-gram data store 152 is illustrated as being external to the document identification server 140, this is not meant to be limiting. The n-gram data store 152 can be internal to the document identification server 140.

The keyword data store 154 can store a plurality of keywords extracted from the prior art references stored in the document data store 150 as well as information identifying which prior art reference(s) include each keyword. While the keyword data store 154 is illustrated as being external to the document identification server 140, this is not meant to be limiting. The keyword data store 154 can be internal to the document identification server 140.

The document identification server 140 may be implemented as a special-purpose computer system having logical elements. In an embodiment, the logical elements may comprise program instructions recorded on one or more machine-readable storage media. Alternatively, the logical elements may be implemented in hardware, firmware, or a combination thereof. In one embodiment, the document identification server 140 may be implemented in a Java Virtual Machine (JVM) that is executing in a distributed or non-distributed computer system. In other embodiments, the document identification server 140 may be implemented as a combination of programming instructions written in any programming language (e.g. C++, Visual Basic, Python, etc.) and hardware components (e.g., memory, CPU time) that have been allocated for executing the program instructions.

A user may use the user device 160 to view and interact with the interactive user interface generated by the user interface generator 148. The user may also use the user device 160 to provide a document (e.g., a patent application) to the document identification server 140 for analysis. The user device 160 can include a wide variety of computing devices, including personal computing devices, terminal computing devices, laptop computing devices, tablet computing devices, electronic reader devices, mobile devices (e.g., mobile phones, media players, handheld gaming devices, etc.), wearable devices with network access and program execution capabilities (e.g., "smart watches" or "smart eyewear"), wireless devices, set-top boxes, gaming consoles, entertainment systems, televisions with network access and program execution capabilities (e.g., "smart TVs"), and various other electronic devices and appliances. The user devices 160 may execute a browser application or a document search application to communicate with the document identification server 140.

In an embodiment, the network 120 includes any communications network, such as the Internet. The network 120 may be a wired network, a wireless network, or a combination of the two. For example, network 120 may be a local area network (LAN) and/or a wireless area network (WAN).

### Example Flow Diagram for Processing a Prior Art Reference Corpus

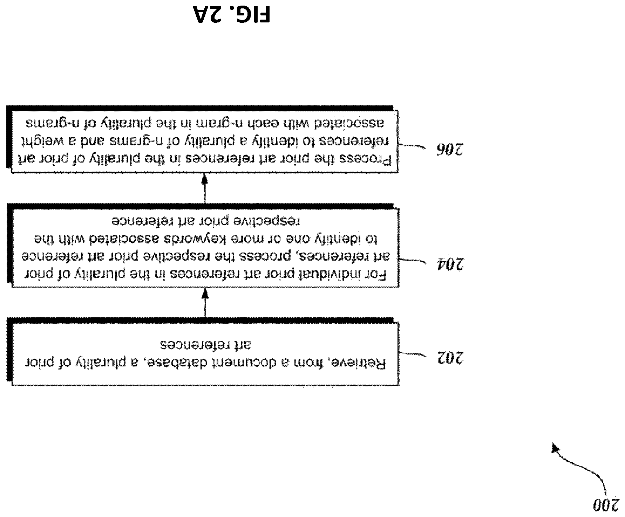

Figure 2A is a flowchart 200 depicting an illustrative operation of processing a prior art reference corpus. The method of Figure 2A may be performed by various computing devices, such as by the document identification server 140 described above. Depending on the embodiment, the method of Figure 2A may include fewer and/or additional blocks and the blocks may be performed in an order different than illustrated.

At block 202, a plurality of prior art references is retrieved from a document database. For example, the document database can be the document data store 150. The prior art references can include patents, patent publications, academic papers, and/or the like.

At block 204, for individual prior art references in the plurality of prior art references, the respective prior art references are processed to identify one or more keywords associated with the respective prior art reference. For example, the identified keywords may be used to identify which prior art references include words that match n-grams extracted from a document provided by a user.

At block 206, the prior art references in the plurality of prior art references are processed to identify a plurality of n-grams and a weight associated with each n-gram in the plurality of n-grams. For example, the weight can be derived from a number of times a particular n-gram occurs within a prior art reference or all the prior art references in aggregate. In an embodiment, the higher the number of occurrences, the higher the weight.

### Example Flow Diagram for Identifying a Prior Art Reference

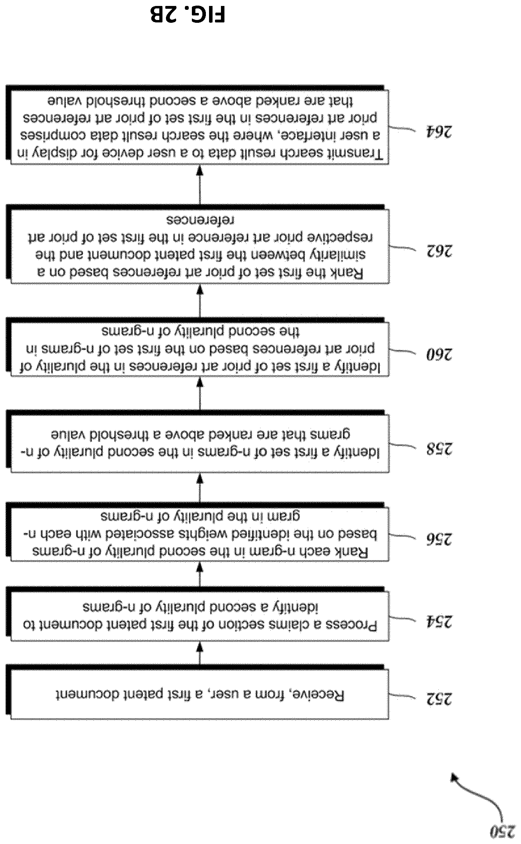

Figure 2B is a flowchart 250 depicting an illustrative operation of identifying a prior art reference. The method of Figure 2B may be performed by various computing devices, such as by the document identification server 140 described above. Depending on the embodiment, the method of Figure 2B may include fewer and/or additional blocks and the blocks may be performed in an order different than illustrated.

At block 252, a first patent document is received from a user. For example, the first patent document can be a patent application being examined by a patent examiner.

At block 254, a claims section of the first patent document can be processed to identify a second plurality of n-grams. For example, the second plurality of n-grams can be identified in the same manner as the plurality of n-grams in block 206 of Figure 2A. In some embodiments, the second plurality of n-grams are assigned weights based on the portion of the first patent document from which the respective n-grams originate. For example, n-grams originating in the claims section or in the independent claims may be weighted higher than n-grams originating in the background section.

At block 256, each n-gram in the second plurality of n-grams can be ranked based on the identified weights associated with each n-gram in the plurality of n-grams (e.g., as identified in block 206 in Figure 2A above). Thus, an n-gram with a higher weight can be assigned a higher ranking.

At block 258, a first set of n-grams in the second plurality of n-grams are identified that are ranked above a threshold value. For example, further analyzing all of the n-grams in the second plurality of n-grams may result in too many search results. Thus, the number of n-grams to be further analyzed can be limited. A blacklist of n-grams can also be used to remove certain n-grams in the second plurality of n-grams from being included in the first set of n-grams, as described above.

At block 260, a first set of prior art references in the plurality of prior art references is identified based on the first set of n-grams in the second plurality of n-grams. For example, the first set of prior art references include prior art references that include keywords that match the n-grams in the first set, where the keywords found within the prior art references are identified as described above with respect to block 204 of Figure 2A. Optionally, the first set of prior art references can be further filtered (e.g., by the user, by the similar document identifier 146, etc.) based on the subject matter disclosed in the respective prior art references, based on one or more keywords, based on priority dates, and/or the like. For example, while a prior art reference in the first set may include a keyword that matches an n-gram in the first set, the subject matter (e.g., as determined based on the title, the abstract, the field of invention, etc.) of the prior art reference may be different than the subject matter of the first patent document. As another example, a user interface can present a user with a list of keywords used to identify the first set of prior art references. The user can deselect one or more keywords, which causes the search results (e.g., the identified first set of prior art references) to be updated to reflect the prior art references that correspond to the remaining, selected keywords. As another example, the user can select a priority date (e.g., the priority date of the patent application being examined by the patent examiner, a priority date after the priority date of the patent application being examined, etc.) to filter prior art references from the first set to include those prior art references that have a priority date, publication date, issue date, etc. before the selected priority date. The selected priority date can be adjusted to increase (e.g., if the priority date is set later) or decrease (e.g., if the priority date is set earlier) the number of identified prior art references in the first set.

At block 262, the first set of prior art references (or the filtered first set of prior art references) are ranked based on a similarity between the first patent document and the respective prior art references in the first set of prior art references. For example the first set of prior art references can be ranked using a document similarity technique (e.g., cosine similarity, semantic similarity, terminology extraction, Jacard similarity, metric similarity, Euclidean distance, etc.), using artificial intelligence (e.g., neural networks, deep learning, support vector machines, clustering, Bayesian networks, etc.), by identifying which prior art references include keywords that correspond to n-grams ranked above the threshold value, based on the sections or patent fields in the prior art references in which the keywords are found (e.g., a prior art reference that includes a keyword and that corresponds to a first art unit may be more important, and thus ranked higher, than another prior art reference that includes the keyword and that corresponds to a second art unit, a keyword found in the claims section may cause a prior art reference to be ranked higher than if the keyword is found in the background section), and/or the like.

At block 264, search result data is transmitted to a user device for display in a user interface, where the search results data comprises the prior art references in the first set of prior art references that are ranked above a second threshold value. For example, a select number of the prior art references in the first set of prior art references may be displayed to limit the number of search results. Embodiments provide methods and systems for identifying relevant prior art documents in a way that utilizes less processing resources. For example, a user is not required to select and input keywords for the first patent application. For example, the first patent application and the prior art applications are represented for subsequent analysis in a reduced data format using n-grams, which makes computation less intensive and involves less data being transferred.

### Implementation Mechanisms

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, server computer systems, portable computer systems, handheld devices, networking devices or any other device or combination of devices that incorporate hard-wired and/or program logic to implement the techniques.

Computing device(s) are generally controlled and coordinated by operating system software, such as iOS, Android, Chrome OS, Windows XP, Windows Vista, Windows 7, Windows 8, Windows Server, Windows CE, Unix, Linux, SunOS, Solaris, iOS, Blackberry OS, VxWorks, or other compatible operating systems. In other embodiments, the computing device may be controlled by a proprietary operating system. Conventional operating systems control and schedule computer processes for execution, perform memory management, provide file system, networking, I/O services, and provide a user interface functionality, such as a graphical user interface ("GUI"), among other things.

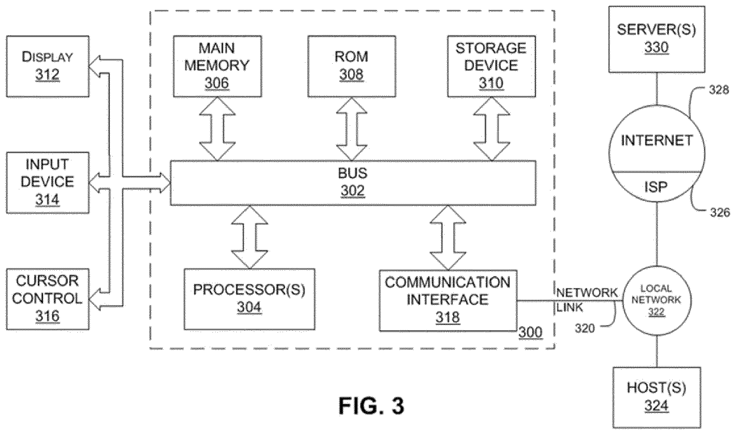

For example, Figure 3 is a block diagram that illustrates a computer system 300 upon which an embodiment may be implemented. For example, any of the computing devices discussed herein may include some or all of the components and/or functionality of the computer system 300.

Computer system 300 includes a bus 302 or other communication mechanism for communicating information, and a hardware processor, or multiple processors, 304 coupled with bus 302 for processing information. Hardware processor(s) 304 may be, for example, one or more general purpose microprocessors.

Computer system 300 also includes a main memory 306, such as a random access memory (RAM), cache and/or other dynamic storage devices, coupled to bus 302 for storing information and instructions to be executed by processor 304. Main memory 306 also may be used for storing temporary variables or other intermediate information during execution of instructions to be executed by processor 304. Such instructions, when stored in storage media accessible to processor 304, render computer system 300 into a special-purpose machine that is customized to perform the operations specified in the instructions. Main memory 306 may also store cached data, such as zoom levels and maximum and minimum sensor values at each zoom level.

Computer system 300 further includes a read only memory (ROM) 308 or other static storage device coupled to bus 302 for storing static information and instructions for processor 304. A storage device 310, such as a magnetic disk, optical disk, or USB thumb drive (Flash drive), etc., is provided and coupled to bus 302 for storing information and instructions. For example, the storage device 310 may store measurement data obtained from a plurality of sensors.

Computer system 300 may be coupled via bus 302 to a display 312, such as a cathode ray tube (CRT) or LCD display (or touch screen), for displaying information to a computer user. For example, the display 312 can be used to display any of the user interfaces generated by the user interface generator 148. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane. In some embodiments, the same direction information and command selections as cursor control may be implemented via receiving touches on a touch screen without a cursor.

Computing system 300 may include a user interface module to implement a GUI that may be stored in a mass storage device as executable software codes that are executed by the computing device(s). This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "module," as used herein, refers to logic embodied in hardware or firmware, or to a collection of software instructions, possibly having entry and exit points, written in a programming language, such as, for example, Java, Lua, C, or C++. A software module may be compiled and linked into an executable program, installed in a dynamic link library, or may be written in an interpreted programming language such as, for example, BASIC, Perl, or Python. It will be appreciated that software modules may be callable from other modules or from themselves, and/or may be invoked in response to detected events or interrupts. Software modules configured for execution on computing devices may be provided on a computer readable medium, such as a compact disc, digital video disc, flash drive, magnetic disc, or any other tangible medium, or as a digital download (and may be originally stored in a compressed or installable format that requires installation, decompression or decryption prior to execution). Such software code may be stored, partially or fully, on a memory device of the executing computing device, for execution by the computing device. Software instructions may be embedded in firmware, such as an EPROM. It will be further appreciated that hardware modules may be comprised of connected logic units, such as gates and flip-flops, and/or may be comprised of programmable units, such as programmable gate arrays or processors. The modules or computing device functionality described herein are preferably implemented as software modules, but may be represented in hardware or firmware. Generally, the modules described herein refer to logical modules that may be combined with other modules or divided into sub-modules despite their physical organization or storage

Computer system 300 may implement the techniques described herein using customized hard-wired logic, one or more ASICs or FPGAs, firmware and/or program logic which in combination with the computer system causes or programs computer system 300 to be a special-purpose machine. According to one embodiment, the techniques herein are performed by computer system 300 in response to processor(s) 304 executing one or more sequences of one or more instructions contained in main memory 306. Such instructions may be read into main memory 306 from another storage medium, such as storage device 310. Execution of the sequences of instructions contained in main memory 306 causes processor(s) 304 to perform the process steps described herein. In alternative embodiments, hard-wired circuitry may be used in place of or in combination with software instructions.

The term "non-transitory media," and similar terms, as used herein refers to any media that store data and/or instructions that cause a machine to operate in a specific fashion. Such non-transitory media may comprise non-volatile media and/or volatile media. Non-volatile media includes, for example, optical or magnetic disks, such as storage device 310. Volatile media includes dynamic memory, such as main memory 306. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

Non-transitory media is distinct from but may be used in conjunction with transmission media. Transmission media participates in transferring information between non-transitory media. For example, transmission media includes coaxial cables, copper wire and fiber optics, including the wires that comprise bus 302. Transmission media can also take the form of acoustic or light waves, such as those generated during radio-wave and infra-red data communications.

Various forms of media may be involved in carrying one or more sequences of one or more instructions to processor 304 for execution. For example, the instructions may initially be carried on a magnetic disk or solid state drive of a remote computer. The remote computer can load the instructions into its dynamic memory and send the instructions over a telephone line using a modem. A modem local to computer system 300 can receive the data on the telephone line and use an infra-red transmitter to convert the data to an infra-red signal. An infra-red detector can receive the data carried in the infra-red signal and appropriate circuitry can place the data on bus 302. Bus 302 carries the data to main memory 406, from which processor 304 retrieves and executes the instructions. The instructions received by main memory 306 may retrieve and execute the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card, cable modem, satellite modem, or a modem to provide a data communication connection to a corresponding type of telephone line. As another example, communication interface 318 may be a local area network (LAN) card to provide a data communication connection to a compatible LAN (or WAN component to communicated with a WAN). Wireless links may also be implemented. In any such implementation, communication interface 318 sends and receives electrical, electromagnetic or optical signals that carry digital data streams representing various types of information.

Network link 320 typically provides data communication through one or more networks to other data devices. For example, network link 320 may provide a connection through local network 322 to a host computer 324 or to data equipment operated by an Internet Service Provider (ISP) 326. ISP 326 in turn provides data communication services through the world wide packet data communication network now commonly referred to as the "Internet" 328. Local network 322 and Internet 328 both use electrical, electromagnetic or optical signals that carry digital data streams. The signals through the various networks and the signals on network link 320 and through communication interface 318, which carry the digital data to and from computer system 300, are example forms of transmission media.

Computer system 300 can send messages and receive data, including program code, through the network(s), network link 320 and communication interface 318. In the Internet example, a server 330 might transmit a requested code for an application program through Internet 328, ISP 326, local network 322 and communication interface 318.

The received code may be executed by processor 304 as it is received, and/or stored in storage device 310, or other non-volatile storage for later execution.

### Terminology

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry. The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating or otherwise vexing to user.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general purpose computer comprising one or more processors should not be interpreted as excluding other computer components, and may possibly include such components as memory, input/output devices, and/or network interfaces, among others.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A computer-implemented method for identifying relevant documents using artificial intelligence comprising:
retrieving, from a document database, a plurality of prior art documents;
for individual patent documents in the plurality of prior art documents, processing the respective prior art document to identify one or more keywords associated with the respective prior art document;
processing the prior art documents in the plurality of prior art documents to identify a plurality of n-grams and a number of occurrences of each n-gram;
analyzing the plurality of n-grams to identify a weight associated with each n-gram in the plurality of n-grams, wherein the weight associated with each n-gram in the plurality of n-grams is based on a number of occurrences of the respective n-gram;
receiving, from a user, a first patent document;
processing a claims section of the first prior art document to identify a second plurality of n-grams;
ranking each n-gram in the second plurality of n-grams based on the identified weights associated with each n-gram in the plurality of n-grams;
identifying a first set of n-grams in the second plurality of n-grams that are ranked above a threshold value;
comparing the first set of n-grams with the one or more keywords;
identifying a first set of prior art documents in the plurality of prior art documents associated with a keyword in the one or more keywords that matches an n-gram in the first set of n-grams based on the comparison;
for each prior art document in the first set of prior art documents, determining a similarity between the first patent document and the respective prior art document in the first set of prior art documents;
scoring the first set of prior art documents based on the determined similarities;
ranking the first set of prior art documents based on the scoring; and
transmitting search result data to a user device for display in a user interface, wherein the search result data comprises prior art documents in the first set of prior art documents that are ranked above a second threshold value.

2. The computer-implemented method of Claim 1, wherein determining a similarity between the first patent document and the respective prior art document in the first set of prior art documents further comprises determining the similarity between the first patent document and the respective prior art document in the first set of prior art documents using one of a vector comparison, a comparison of patent fields, or artificial intelligence.

3. The computer-implemented method of Claim 2, wherein the patent fields comprises at least one of a title field, an inventor field, an assignee field, a patent number field, a patent date field, a priority date field, a classification code field, an art unit field, a sub-art unit field, an examiner name field, an application number field, an application filing date field, or an other publications field.

4. The computer-implemented method of Claim 1, wherein the prior art documents in the plurality of prior art documents comprise at least one of a patent, a patent publication, or an academic paper.

5. The computer-implemented method of Claim 1, wherein determining a similarity between the first patent document and the respective prior art document in the first set of prior art documents further comprises determining the similarity between the first patent document and the respective prior art document in the first set of prior art documents using a neural network.

6. The computer-implemented method of Claim 1, wherein the vector comparison comprises cosine similarity.

7. A document identification system for identifying a prior art reference using artificial intelligence comprising:
one or more computer processors; and
a computer readable storage medium storing program instructions configured for execution by the one or more computer processors in order to cause the computing system to:
retrieve, from a document database, a plurality of prior art documents;
process the prior art documents in the plurality of prior art documents to identify a plurality of n-grams and a weight associated with each n-gram in the plurality of n-grams;
receive, from a user, a first patent document;
process a claims section of the first patent document to identify a second plurality of n-grams;
rank each n-gram in the second plurality of n-grams based on the identified weights associated with each n-gram in the plurality of n-grams;
identify a first set of n-grams in the second plurality of n-grams that are ranked above a threshold value;
identify a first set of prior art documents in the plurality of prior art documents based on the first set of n-grams in the second plurality of n-grams;
rank the first set of prior art documents based on a similarity between the first prior art document and the respective prior art document in the first set of prior art documents; and
display, in a user interface, prior art documents in the first set of prior art documents that are ranked above a second threshold value.

8. The document identification system of Claim 7, wherein the prior art documents in the plurality of prior art documents comprise at least one of a patent, a patent publication, or an academic paper.

9. The document identification system of Claim 7, wherein the computer readable storage medium further stores program instructions that cause the computing system to rank the first set of prior art documents using one of a vector comparison, a comparison of patent fields, or artificial intelligence.

10. The document identification system of Claim 7, wherein the computer readable storage medium further stores program instructions that cause the computing system to retrieve a blacklist that lists a third plurality of n-grams and not weight n-grams in the third plurality of n-grams.

11. The document identification system of Claim 7, wherein the computer readable storage medium further stores program instructions that cause the computing system to rank the first set of prior art documents based on the similarity and based on user feedback using machine learning techniques.

12. Non-transitory, computer-readable storage media comprising computer-executable instructions for identifying a prior art reference using artificial intelligence, wherein the computer-executable instructions, when executed by a computer system, cause the computer system to:
retrieve, from a document database, a plurality of prior art documents;
process the prior art documents in the plurality of prior art documents to identify a plurality of n-grams and a weight associated with each n-gram in the plurality of n-grams;
receive, from a user, a first patent document;
process a claims section of the first patent document to identify a second plurality of n-grams;
rank each n-gram in the second plurality of n-grams based on the identified weights associated with each n-gram in the plurality of n-grams;
identify a first set of n-grams in the second plurality of n-grams that are ranked above a threshold value;
identify a first set of prior art documents in the plurality of prior art documents based on the first set of n-grams in the second plurality of n-grams;
rank the first set of prior art documents based on a similarity between the first prior art document and the respective prior art document in the first set of prior art documents; and
display, in a user interface, prior art documents in the first set of prior art documents that are ranked above a second threshold value.

13. The non-transitory, computer-readable storage media of Claim 12, wherein the prior art documents in the plurality of prior art documents comprise at least one of a patent, a patent publication, or an academic paper.

14. The non-transitory, computer-readable storage media of Claim 12, wherein the computer-executable instructions, when executed, further cause the computer system to rank the first set of prior art documents using one of a vector comparison, a comparison of patent fields, or artificial intelligence.

15. The non-transitory, computer-readable storage media of Claim 12, wherein the computer-executable instructions, when executed, further cause the computer system to retrieve a blacklist that lists a third plurality of n-grams and not weight n-grams in the third plurality of n-grams.

16. The non-transitory, computer-readable storage media of Claim 12, wherein the computer-executable instructions, when executed, further cause the computer system to rank the first set of prior art documents based on the similarity and based on user feedback using machine learning techniques.
